# FASCICULE DE BREVET EUROPEEN

(11) **EP 2 098 774 B1**
(45) Date de publication et mention de la délivrance du brevet: **08.07.2020**
(21) Numéro de dépôt: 09153175.6
(22) Date de dépôt: 19.02.2009
(51) Int. Cl.: F21S 43/14, F21S 43/239, F21S 43/243, F21S 43/245, F21S 43/249

(54) **Système optique avec fonction principale pour véhicule automobile**
Optisches System mit Hauptfunktion für Kraftfahrzeug
Optical system with main function for an automobile

(30) Priorité: 03.03.2008 FR 0801168
(43) Date de publication de la demande: 09.09.2009
(73) Titulaire: VALEO VISION, 93012 Bobigny (FR)
(72) Inventeur: Martin, Laure, 89100 Sens (FR); Vernisse, Benjamin, 89510 Veron (FR); Thierry, Benjamin, 10190 Palis (FR); Vathonne, Nicolas, 89190 Les Sièges (FR); Gasquet, Jean-Claude, 89100 Saint Clément (FR)

(56) Documents cités:
- EP-A- 1 288 562
- EP-A- 1 715 244
- EP-A- 1 881 263
- EP-A- 1 881 265
- EP-A1- 1 970 616
- DE-A1- 10 065 020
- DE-A1-102004 003 577
- DE-A1-102005 046 538
- FR-A- 1 334 217
- FR-A- 2 819 040
- JP-A- 2006 236 588
- US-A1- 2003 085 642

## Description

La présente invention a pour objet un système optique pour véhicule automobile présentant une fonction principale stylisée, réalisée au moyen d'au moins une source lumineuse, notamment de type diode électroluminescente. L'invention a essentiellement pour but de proposer, à partir d'un nombre limité de sources lumineuses, préférentiellement de type LEDs, un système optique réalisant une fonction optique principale au moyen d'un écran de transmission dont la surface apparente est suffisante pour satisfaire aux exigences réglementaires de la fonction optique considérée. Par système optique, on désigne un élément formant partie ou totalité d'un dispositif projecteur, présentant au moins une source lumineuse et des moyens de réalisation d'au moins une fonction optique ; par fonction optique, on désigne la production d'un faisceau lumineux réglementaire pour la réalisation de certains des feux mentionnés ci-dessous.

Le domaine de l'invention est, d'une façon générale, celui des projecteurs ou des feux de véhicule automobile. Dans ce domaine, on connaît différents types de projecteurs, parmi lesquels on trouve essentiellement :
- des feux de position, d'intensité et de portée faible ;
- des feux de croisement, ou codes, d'intensité plus forte et de portée sur la route avoisinant 70 mètres ;
- des projecteurs feux de route longue portée, et des feux de complément de type longue portée, dont la zone de vision sur la route avoisine 200 mètres ;
- des projecteurs perfectionnés, dits bimodes, qui cumulent les fonctions de feux de croisement et de feu de route en incorporant un cache amovible ;
- des feux anti-brouillard ;
- des feux de signalisation, notamment des indicateurs de direction avant et arrière, des feux de recul, ou des lanternes ;
- des dispositifs de signalisation de type feu de position à usage diurne, appelés dispositifs DRL (pour Daytime Running Light en langue anglaise)....

Le domaine d'application de l'invention est essentiellement celui relatif aux feux de type stop, indicateurs de direction, lanterne ou encore DRL.

Pour l'ensemble de ces projecteurs et feux, traditionnellement, on utilise des sources lumineuses de type lampes halogènes, ou lampes à décharge. Mais depuis quelques années, les équipementiers automobiles ont proposé l'utilisation de diodes électroluminescentes, ou LEDs ; cette utilisation concerne par exemple les feux de signalisation ou les feux arrière.

Les diodes électroluminescentes présentent un certain nombre d'avantages :
- tout d'abord, depuis longtemps, on sait que ce type de diodes ne rayonne pas de façon omnidirectionnelle, mais rayonne dans un demi espace opposé à un substrat qui supporte la jonction P-N de la diode considérée ; ainsi, en utilisant un rayonnement plus directif que les lampes halogènes, ou à décharge, de l'état de la technique, la quantité d'énergie perdue est moins importante qu'avec les lampes à décharge ou halogènes ;
- ensuite, on a récemment perfectionné ces diodes en terme d'intensité de puissance de rayonnement. De plus, les diodes fabriquées émettent un rayonnement depuis longtemps dans le rouge, mais désormais également dans le blanc, ce qui accroît le champ de leurs utilisations envisageables. La quantité de chaleur qu'elles dégagent est relativement limitée, et un certain nombre de contraintes, liées à la dissipation de la chaleur dans les dispositifs projecteurs de l'état de la technique, disparaissent ; la problématique de dissipation de chaleur demeure cependant importante pour les LEDs de puissance ;
- enfin, les diodes consomment moins d'énergie, même à intensité de rayonnement égal, que les lampes à décharge ou les lampes halogènes ; elles sont peu encombrantes, et leur forme particulière offre des possibilités nouvelles pour la réalisation et la disposition des surfaces complexes qui leur sont associées, notamment en les disposant sur des supports électroniques de type support électronique flexible.

De plus en plus, notamment pour répondre à des critères esthétiques souhaités par les constructeurs automobiles, l'utilisation des LEDs s'est développée. Cette utilisation permet notamment la réalisation de dispositifs projecteurs présentant des volumes originaux, en disposant par exemple les LEDs tridimensionnellement, c'est-à-dire sur un substrat support non plan, au sein des dispositifs projecteurs considérés, ou encore en utilisant des éléments de type guide de lumière, comme illustré par exemple dans les demandes de brevet EP1881263 A1, EP1715244 A1 et EP1288562 A1.

En outre, on a récemment proposé un système optique dans lequel différentes LEDs étaient spécifiquement utilisées pour réaliser un rideau de lumière au moyen d'un écran interne au système optique, dans lequel la lumière produit par la diode ou par les diodes se propage, ledit système optique réalisant par ailleurs une fonction optique, dite fonction optique principale par comparaison avec une autre fonction optique éventuellement réalisée par le système optique considéré, matérialisée par un faisceau lumineux généré par une tierce source lumineuse. Il est, dans ce système optique, nécessaire de faire intervenir une pluralité de sources lumineuses, les LEDs utilisées n'intervenant pas dans l'élaboration de la fonction optique principale. Le coût d'un tel système optique est en conséquence élevé, du fait du nombre important de sources lumineuses qu'il nécessite, et son encombrement est, pour les mêmes raisons, significatif.

Par rideau de lumière, on désigne une surface illuminée d'une partie d'un système optique, l'illumination étant produite par des rayons lumineux circulant à l'intérieur d'un volume délimité notamment par ladite surface illuminée, l'illumination ayant jusqu'alors une fonction uniquement décorative, ne réalisant pas, ou ne contribuant pas - ou de façon non significative - à l'élaboration d'une fonction optique principale. Avantageusement, l'illumination produite est la plus continue possible, sans effet de pixellisation.

L'objet de l'invention propose une solution aux problèmes et inconvénients qui viennent d'être exposés. Dans l'invention, on propose un système optique dans lequel on limite le nombre de sources lumineuses intervenant, préférentiellement en se limitant à l'utilisation de LEDs pour la réalisation d'une fonction principale. Par ailleurs, dans l'invention, on dispose un écran dans lequel sont diffusés les signaux, ou rayons, lumineux produits par les sources lumineuses, notamment des LEDs de telle manière que, par le positionnement de l'écran de diffusion, c'est essentiellement une tranche de sortie de l'écran qui contribue à la réalisation de la fonction principale recherchée ; la surface éclairée apparente est augmentée par la forme de l'écran considéré, une joue latérale dudit écran diffusant de la lumière de manière contributive à la réalisation de la fonction principale recherchée. Avantageusement, le positionnement de l'écran de diffusion est tel qu'il contribue à la réalisation d'une deuxième fonction optique du type marquage latéral, fonction connue sous l'appellation "side marker" en langue anglaise.

L'invention concerne donc essentiellement un système optique pour projecteur ou feu de véhicule automobile, ledit système optique réalisant au moins une fonction optique principale et comportant notamment :
- un écran de diffusion, encore appelé guide de lumière ;
- au moins une source lumineuse, notamment de type LED, chaque source lumineuse du système optique produisant un ensemble de rayons lumineux se propageant dans l'écran de diffusion ;

Système optique dans lequel :
- l'écran présente une forme de feuille notamment courbée ou sensiblement plane, avec une joue latérale supérieure et une joue latérale inférieure qui se rejoignent par l'intermédiaire d'un pourtour présentant une face arrière, une tranche avant ; le pourtour pouvant également comprendre, une première face latérale et une deuxième face latérale ;
- la fonction principale est réalisée essentiellement via une face de sortie constituée par la tranche avant de l'écran de diffusion ; et
- au moins une partie de la joue latérale supérieure diffuse un faisceau lumineux notamment contribuant à la réalisation de la fonction principale et/ou réalisant une fonction optique complémentaire de rappel,
- ladite partie est orientée de manière à augmenter la surface apparente éclairée du système optique dans la direction d'émission de la lumière de la fonction principale.

Le système optique selon l'invention peut comporter, en plus des caractéristiques principales qui viennent d'être mentionnées dans le paragraphe précédent, une ou plusieurs caractéristiques supplémentaires parmi les suivantes:
- la tranche avant présente une épaisseur comprise entre 3 et 5 millimètres, notamment 4 millimètres ;
- une première partie de la joue latérale supérieure diffuse un faisceau lumineux contribuant à la réalisation de la fonction principale ;
- la fonction optique principale réalisée est du type feu stop, ou du type lanterne, ou du type indicateur de direction ;
- une deuxième partie de la joue latérale supérieure diffuse un faisceau lumineux réalisant une fonction optique complémentaire ;
- la fonction optique complémentaire réalisée est du type marquage latéral ;
- la joue latérale supérieure diffuse un faisceau lumineux via une un ensemble de micro-aspérités aptes à disperser vers l'extérieur de l'écran de diffusion une partie des rayons lumineux se propageant dans ledit écran de diffusion, ces micro-aspérités formant notamment une pluralité (110) de minidisques ;
- les micro-aspérités forment des minidisques présentant un diamètre sensiblement compris entre deux dixièmes de millimètres et six dixièmes de millimètres, typiquement quatre dixièmes de millimètres;
- les sources lumineuses, notamment les LEDs, sont disposées en vis-à-vis de la face arrière de l'écran de diffusion ;
- il comprend au moins une face latérale, les sources lumineuses, notamment les LEDs, étant disposées en vis-à-vis d'au moins une des faces latérales de l'écran de diffusion ;
- les sources lumineuses, notamment les LEDs, sont disposées en vis-à-vis d'une unique face latérale de l'écran de diffusion ;
- la face arrière du pourtour comporte une pluralité de prismes réfléchissant aptes à orienter les rayons lumineux produits par les sources lumineuses, notamment les LEDs, vers la tranche avant de l'écran de diffusion.

Les caractéristiques supplémentaires sont associées, selon toutes les combinaisons possibles et dans la mesure où ces caractéristiques supplémentaires ne s'excluent pas mutuellement, dans différents exemples de réalisation de l'objet de l'invention.

La présente invention se rapporte également à un projecteur ou à un feu de signalisation de véhicule automobile équipé d'un système optique selon l'invention, avec ses caractéristiques principales, et éventuellement une ou plusieurs caractéristiques supplémentaires qui viennent d'être mentionnées.

L'invention et ses différentes applications seront mieux comprises à la lecture de la description qui suit et à l'examen des figures qui l'accompagnent.

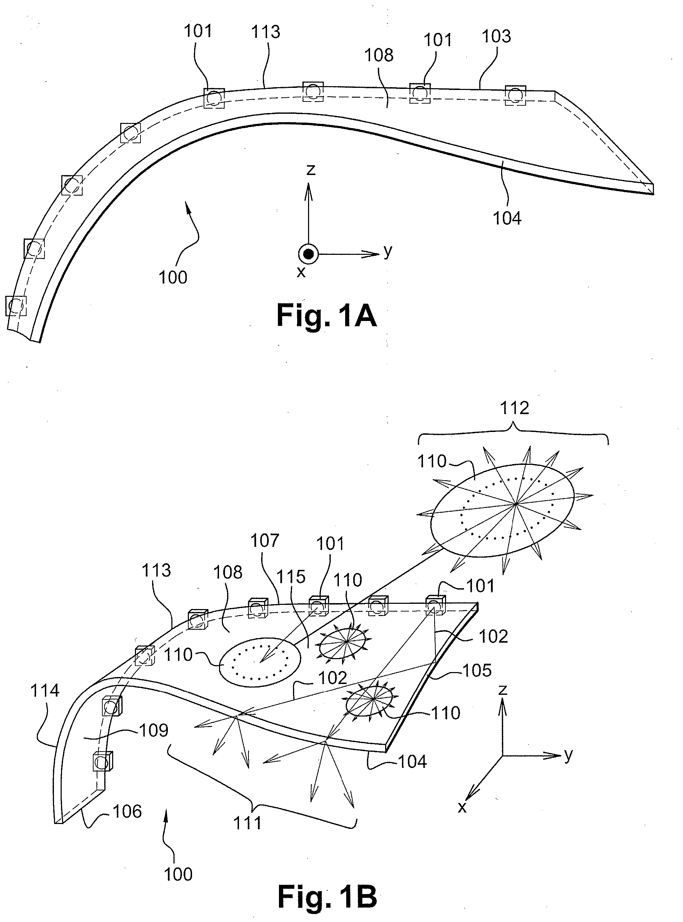

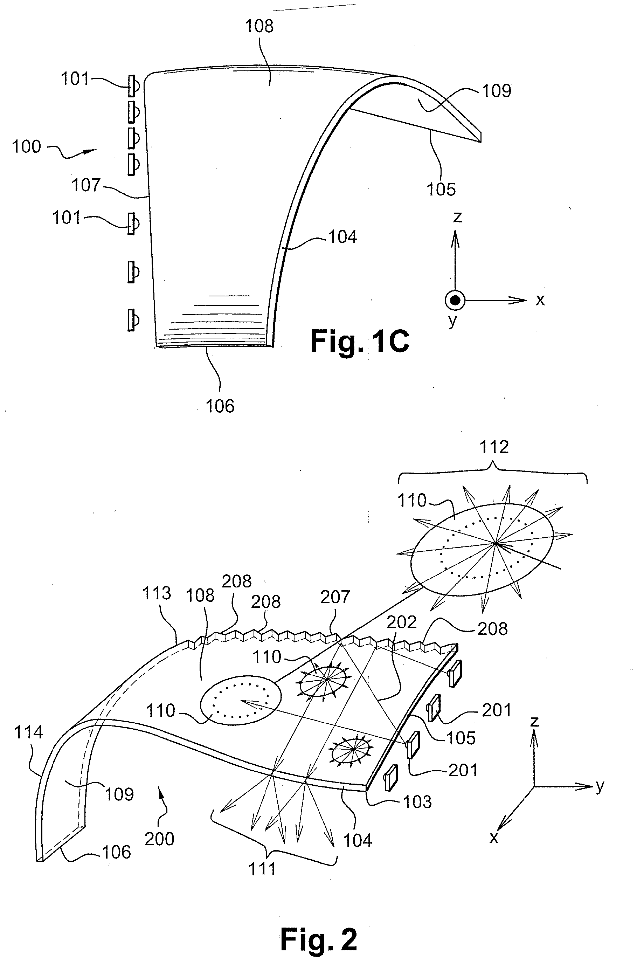

Celles-ci ne sont présentées qu'à titre indicatif et nullement limitatif de l'invention. Les figures montrent :
- aux figures 1-A, 1-B et 1-C, différentes vues en perspective d'un premier exemple de réalisation de système optique selon l'invention ;
- à la figure 2, une vue en perspective d'un deuxième exemple de réalisation de système optique selon l'invention ;
- à la figure 3, une vue en perspective d'un troisième mode de réalisation ;
- à la figure 4, une vue de dessus du troisième mode de réalisation représenté en figure 3.

Les différents éléments apparaissant sur plusieurs figures auront gardé, sauf précision contraire, la même référence.

Les figures 1-A, 1-B et 1-C montrent un premier exemple de réalisation de système optique selon l'invention dans respectivement une première position, une deuxième position et une troisième position. Un repère tridimensionnel orthogonal est représenté sur ces figures, avec un axe des abscisses X correspondant à l'axe de déplacement du véhicule en marche arrière, et un axe des cotes Z correspondant à la verticale.

Sur ces figures, le système optique 100 selon l'invention est constitué d'un écran de diffusion 113 et d'une pluralité de LEDs 101 produisant des rayons lumineux 102 destinés à se propager dans l'écran de diffusion 113. L'écran 113 est réalisé dans une matière plastique transparente, notamment du type PMMA (pour PolyMethyl MethAcrylate) ou PC (pour Polycarbonate ultrafluide à haute transmission).

Avantageusement, les LEDs 101 sont toutes disposées sur un même substrat plan non représenté, qui assure leur maintien et leur pilotage.

L'écran de diffusion 113 présente la forme d'une feuille courbée. Une telle expression désigne le fait que l'écran 113, s'il était aplati, constituerait un élément d'épaisseur homogène, voisine de quatre millimètres, ladite épaisseur étant de dimension faible par rapport aux autres dimensions de la forme aplatie ; qui est de type quadrilatère dans l'exemple représenté.

L'écran de diffusion 113 se caractérise ainsi par une joue latérale supérieure 108, une joue latérale inférieure 109, ces deux parties étant liées par un pourtour 103, présentant une tranche - c'est-à-dire une face linéaire - avant 104, une première face latérale 105, une deuxième face latérale 106 et une face arrière 107. La tranche avant 104 est la face du système optique qui est directement visible par un observateur placé à l'arrière du véhicule équipé du système optique considéré. Dans les exemples représentés, l'écran de diffusion est courbé de telle sorte qu'un observateur placé à l'arrière du véhicule voit au moins une partie de la joue latérale supérieure 108. Une telle caractéristique se traduit par le fait qu'au moins une des faces latérales 105 ou 106 du pourtour 103 constitue un segment courbé, ou au moins incliné.

Dans le premier exemple représenté, les diodes 101 sont disposées en vis-à-vis de la face arrière 107, au niveau de laquelle les rayons lumineux 102 qu'elles produisent entrent dans l'écran de diffusion 113. Les rayons lumineux 102 se propagent ainsi dans le volume défini par l'écran de diffusion 113, éventuellement après réflexion au niveau des faces latérales 105 et 106, pour sortir de l'écran de diffusion 113 au niveau de la tranche avant 104, sous la forme d'un faisceau lumineux 111, où une fonction optique principale est au moins partiellement réalisée, par exemple du type lanterne.

Avantageusement, la joue latérale supérieure 108 est constituée d'une pluralité de minidisques, de diamètre compris entre 2 et 6 dixièmes de millimètres, qui permettent, grâce aux micro-aspérités qu'ils présentent, de diffuser vers l'extérieur de l'écran de diffusion 113, au travers d'une première partie 115 de la joue latérale supérieure 108, une partie des rayons lumineux 102 sous la forme d'un faisceau lumineux 112. On parle souvent, pour décrire une telle surface de diffusion, de surface micro-optique. Sur la figure 1B, les minidisques sont représentés par les points à l'intérieur d'une zone 110 entourée d'un cercle, représentée agrandie en haut et à droite de la représentation de l'écran de diffusion 113. Dans la représentation agrandie, un faisceau lumineux 112 généré par l'un des minidisques a été représenté par un ensemble de flèches. Bien entendu la plupart, voire chacun, des minidisques génère un faisceau lumineux 112. Deux autres zones 110 ont été représentées de façon schématique sur l'écran de diffusion 113. Les minidisques peuvent préférentiellement être répartis sur toute la joue latérale 108. Les faisceaux lumineux 112, correspondant à la lumière diffusée par les minidisques contribuent à la réalisation de la fonction optique principale en augmentant la surface apparente éclairée du système optique 100. La surface apparente éclairée peut ainsi être plus ou moins agrandie en inclinant plus ou moins le système optique 100.

La tranche avant 104 est rendue homogène grâce à une surface soit parfaitement diffusante pour cacher les points chauds et répartir spatialement les rayons, soit recouverte de motifs optiques (équivalents à des surfaces pseudo-toriques de petites dimensions en accord avec la surface) pour répartir spatialement les rayons, soit parfaitement polie pour laisser apparaître les points chauds correspondant à la position de l'origine des émettrices, des LEDs.

Avantageusement, on utilise une partie 114 de la joue latérale supérieure 108 pour réaliser une fonction complémentaire du type marquage latéral (side marker en langue anglaise) : à cet effet, on prévoit que la partie 114 soit sensiblement verticale, et qu'elle dépasse au moins partiellement de la carrosserie du véhicule de manière à être visible lorsque ledit véhicule est regardé de côté.

La figure 2 montre un deuxième exemple 200 de réalisation de système optique selon l'invention. Le deuxième exemple de réalisation diffère du premier exemple de réalisation par les caractéristiques suivantes :
- des LEDs 201, produisant des rayons lumineux 202, sont disposées en vis-à-vis de la première face latérale 105, et non plus en vis-à-vis de la face arrière 107 ;
- la face arrière 107, qui était plane dans le premier exemple 100, est remplacée par une face arrière 207, constituée d'une succession de prismes réfléchissant 208, qui assurent, par réflexion totale, la redirection des rayons lumineux 202 vers la tranche avant 104, sur toute sa longueur nécessaire à la réalisation de la fonction principale, comme dans le premier exemple décrit.

Les autres éléments qui apparaissaient dans le premier exemple de réalisation sont toujours présents, et remplissent la même fonction.

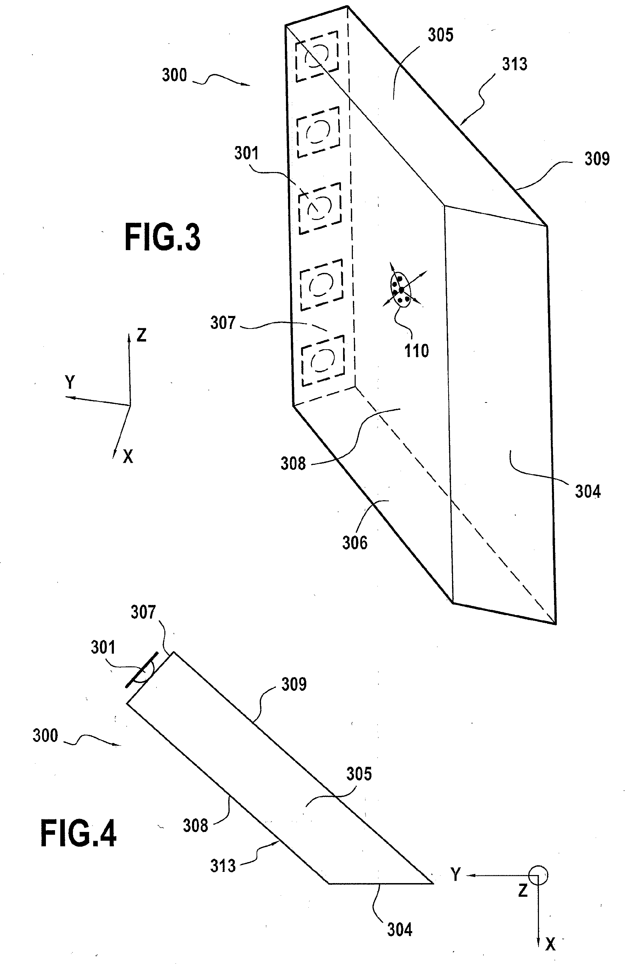

Les figures 3 et 4 montrent un troisième exemple 300 de réalisation de système optique selon l'invention. Il diffère du premier exemple de réalisation en ce que l'écran de diffusion 313 est sensiblement plan, donc en forme de feuille sensiblement plane. Les joues latérales inférieure 309 et supérieure 308 sont sensiblement planes. Préférentiellement, la tranche arrière 307 ainsi que les tranches latérales 305 et 306 sont également sensiblement planes. La face de sortie 304 effectue préférentiellement avec la joues latérale supérieure 308 un angle supérieur à 90 degrés et l'écran de diffusion 313 est orienté de tel manière à ce que :
- la face de sortie 304 est sensiblement perpendiculaire à l'axe X, cet axe X correspondant à la direction d'émission de la lumière de la fonction principale ; et
- la joue latérale supérieure effectue un angle aiguë par rapport à l'axe transversal Y, la tranche avant 304 ainsi que la joue latérale 308 sont directement visible par un observateur placé face à la direction de l'axe X.

Dans ce troisième exemple, l'orientation permet donc d'avoir d'une part la fonction principale essentiellement ou majoritairement réalisée par la tranche de sortie 304 selon l'axe X, c'est-à-dire vers l'arrière du véhicule lorsque le dispositif est situé dans un feu arrière de véhicule, et d'autre part, au moyen de la lumière diffusée par la joue latérale supérieure 308, d'avoir une augmentation de la surface apparente selon l'axe X de cette fonction principale, ainsi q'une fonction de rappel selon l'axe Y, soit sur le côté du véhicule lorsque le dispositif est situé à l'arrière du véhicule.

Les autres éléments, par exemple les micro-aspérités, qui apparaissaient dans le premier exemple de réalisation sont toujours présents dans ce troisième exemple, et remplissent la même fonction.

Pour l'explication de la présente invention, l'expression « joue latérale supérieure » désigne d'une façon générale la joue latérale orientée vers l'extérieur du véhicule et donc visible par un observateur. En particulier, elle pourrait s'appliquer à un écran de diffusion qui, une fois monté sur le véhicule, présenterait une joue latérale apparente verticale, voire penchée vers le sol.

## Revendications

1. Système optique (100 ; 200 ; 300) pour un projecteur ou un feu de véhicule automobile, ledit système optique réalisant au moins une fonction optique principale et comportant notamment :
- un écran de diffusion, encore appelé guide de lumière (113 ; 313) ;
- au moins une source lumineuse, notamment de type LED (101 ; 201 ; 301), chaque source lumineuse du système optique produisant un ensemble de rayons lumineux (102 ; 202) se propageant dans l'écran de diffusion ;
**caractérisé en ce que** :
- l'écran (113 ; 313) présente une forme de feuille courbée ou sensiblement plane, avec une joue latérale supérieure (108 ; 308) et une joue latérale inférieure (109) qui se rejoignent par l'intermédiaire d'un pourtour (103) présentant une face arrière (107 ; 207 ; 307) et une tranche avant (104 ; 304) ;
- la fonction principale est réalisée essentiellement via une face de sortie constituée par la tranche avant (104 ; 304) de l'écran de diffusion (113 ; 313) ; et
- au moins une partie (115) de la joue latérale supérieure (108 ; 308) diffuse un faisceau lumineux (112) notamment contribuant à la réalisation de la fonction principale et/ou réalisant une fonction optique complémentaire de rappel ; et
- ladite partie (115) est orientée de manière à augmenter la surface apparente éclairée du système optique dans la direction d'émission (X) de la lumière de la fonction principale.

2. Système optique (100 ; 200 ; 300) selon la revendication précédente **caractérisé en ce que** la tranche avant (104 ; 304) présente une épaisseur comprise entre 3 et 5 millimètres, notamment 4 millimètres.

3. Système optique (100 ; 200 ; 300) selon l'une des revendications précédentes **caractérisé en ce que** la fonction optique principale réalisée est du type stop, ou du type lanterne, ou du type indicateur de direction.

4. Système optique (100 ; 200 ; 300) selon la revendication précédente **caractérisé en ce que** la joue latérale supérieure (108 ; 308) diffuse un faisceau lumineux (112) réalisant une fonction optique complémentaire du type marquage latéral.

5. Système optique (100 ; 200 ; 300) selon l'une au moins des revendications précédentes **caractérisé en ce que** la joue latérale supérieure (108 ; 308) diffuse un faisceau lumineux via un ensemble de micro-aspérités aptes à disperser vers l'extérieur de l'écran de diffusion (113 ; 313) une partie (112) des rayons lumineux se propageant dans ledit écran de diffusion, ces micro-aspérités formant notamment une pluralité (110) de minidisques.

6. Système optique (100 ; 200 ; 300) selon la revendication précédente **caractérisé en ce que** lesdites micro-aspérités forment des minidisques présentant un diamètre compris entre deux dixièmes de millimètres et six dixièmes de millimètres, typiquement quatre dixièmes de millimètres.

7. Système optique (100 ; 300) selon l'une au moins des revendications précédentes **caractérisé en ce qu'**il comprend une pluralité de sources lumineuses (101, 301) et que lesdites sources lumineuses (101 ; 301) sont disposées en vis-à-vis de la face arrière (107 ; 307) de l'écran de diffusion (113 ; 313).

8. Système optique (200) selon l'une au moins des revendications 1 à 6 **caractérisé en ce qu'**il comprend une pluralité de sources lumineuses (101, 301) et au moins une face latérale (105, 106), lesdites sources lumineuses (201) étant disposées en vis-à-vis d'au moins une des faces latérales (105 ; 106) de l'écran de diffusion (113).

9. Système optique (200) selon la revendication précédente **caractérisé en ce que** lesdites sources lumineuses (201) sont disposées en vis-à-vis d'une unique face latérale de l'écran de diffusion (113).

10. Système optique (200) selon l'une au moins des revendications 8 ou 9 **caractérisé en ce que** la face arrière (207) du pourtour (103) comporte une pluralité de prismes réfléchissant (208) aptes à orienter les rayons lumineux (202) produits par lesdites sources lumineuses (201) vers la tranche avant (104) de l'écran de diffusion (113).

11. Projecteur ou feu de signalisation de véhicule automobile **caractérisé en ce qu'**il est équipé du système optique (100 ; 200 ; 300) selon l'une au moins des revendications précédentes.

## Patentansprüche

1. Optisches System (100; 200; 300) für einen Scheinwerfer oder eine Leuchte eines Kraftfahrzeugs, wobei das optische System wenigstens eine optische Hauptfunktion ausführt und insbesondere umfasst:
- einen Streuschirm, auch Lichtleiter (113; 313) genannt;
- wenigstens eine Lichtquelle, insbesondere vom Typ LED (101; 201; 301), wobei jede Lichtquelle des optischen Systems eine Gesamtheit von Lichtstrahlen (102; 202) erzeugt, die sich im Streuschirm ausbreiten;
**dadurch gekennzeichnet, dass**:
- der Schirm (113; 313) eine Form eines gekrümmten oder im Wesentlichen ebenen Blattes aufweist, mit einer oberen seitlichen Wange (108; 308) und einer unteren seitlichen Wange (109), die über einen Umfang (103) miteinander verbunden sind, der eine hintere Seite (107; 207; 307) und eine vordere Schmalseite (104; 304) aufweist;
- die Hauptfunktion im Wesentlichen über eine Austrittsseite ausgeführt wird, die aus der vorderen Schmalseite (104; 304) des Streuschirms (113; 313) besteht; und
- wenigstens ein Teil (115) der oberen seitlichen Wange (108; 308) ein Lichtbündel (112) streut, das insbesondere zur Ausführung der Hauptfunktion beiträgt und/oder eine zusätzliche optische Erinnerungsfunktion ausführt; und
- der Teil (115) so ausgerichtet ist, dass er die beleuchtete scheinbare Fläche des optischen Systems in der Aussendungsrichtung (X) des Lichts der Hauptfunktion vergrößert.

2. Optisches System (100; 200; 300) nach dem vorhergehenden Anspruch, **dadurch gekennzeichnet, dass** die vordere Schmalseite (104; 304) eine Dicke zwischen 3 und 5 Millimetern, insbesondere von 4 Millimetern aufweist.

3. Optisches System (100; 200; 300) nach einem der vorhergehenden Ansprüche, **dadurch gekennzeichnet, dass** die ausgeführte optische Hauptfunktion vom Typ Bremslicht oder vom Typ Schlusslicht oder vom Typ Fahrtrichtungsanzeiger ist.

4. Optisches System (100; 200; 300) nach dem vorhergehenden Anspruch, **dadurch gekennzeichnet, dass** die obere seitliche Wange (108; 308) ein Lichtbündel (112) streut, das eine zusätzliche optische Funktion vom Typ einer seitlichen Begrenzungsleuchte ausführt.

5. Optisches System (100; 200; 300) nach wenigstens einem der vorhergehenden Ansprüche, **dadurch gekennzeichnet, dass** die obere seitliche Wange (108; 308) ein Lichtbündel über eine Anordnung von Mikro-Rauigkeiten streut, die in der Lage sind, einen Teil (112) der Lichtstrahlen, die sich im Streuschirm ausbreiten, zur Außenseite des Streuschirms (113; 313) hin zu streuen, wobei diese Mikro-Rauigkeiten insbesondere eine Vielzahl (110) von Mini-Scheiben bilden.

6. Optisches System (100; 200; 300) nach dem vorhergehenden Anspruch, **dadurch gekennzeichnet, dass** die Mikro-Rauigkeiten Mini-Scheiben bilden, die einen Durchmesser zwischen zwei Zehntelmillimetern und sechs Zehntelmillimetern, typischerweise von vier Zehntelmillimetern aufweisen.

7. Optisches System (100; 300) nach wenigstens einem der vorhergehenden Ansprüche, **dadurch gekennzeichnet, dass** es mehrere Lichtquellen (101, 301) umfasst und dass die Lichtquellen (101; 301) gegenüber der hinteren Seite (107; 307) des Streuschirms (113; 313) angeordnet sind.

8. Optisches System (200) nach wenigstens einem der Ansprüche 1 bis 6, **dadurch gekennzeichnet, dass** es mehrere Lichtquellen (101, 301) und wenigstens eine seitliche Fläche (105, 106) umfasst, wobei die Lichtquellen (201) gegenüber wenigstens einer der seitlichen Flächen (105; 106) des Streuschirms (113) angeordnet sind.

9. Optisches System (200) nach dem vorhergehenden Anspruch, **dadurch gekennzeichnet, dass** die Lichtquellen (201) gegenüber einer einzigen seitlichen Fläche des Streuschirms (113) angeordnet sind.

10. Optisches System (200) nach wenigstens einem der Ansprüche 8 oder 9, **dadurch gekennzeichnet, dass** die hintere Seite (207) des Umfangs (103) eine Vielzahl reflektierender Prismen (208) umfasst, die in der Lage sind, die von den Lichtquellen (201) erzeugten Lichtstrahlen (202) zur vorderen Schmalseite (104) des Streuschirms (113) hin auszurichten.

11. Scheinwerfer oder Signalleuchte eines Kraftfahrzeugs, **dadurch gekennzeichnet, dass** es mit dem optischen System (100; 200; 300) nach wenigstens einem der vorhergehenden Ansprüche ausgestattet ist.

## Claims

1. Optical system (100; 200; 300) for a motor vehicle headlight or other light, said optical system producing at least one main optical function and notably comprising:
- a diffusion screen, also called light guide (113; 313) ;
- at least one light source, notably of LED type (101; 201; 301), each light source of the optical system producing a set of light rays (102; 202) that are propagated in the diffusion screen;
**characterized in that**:
- the screen (113; 313) has a curved sheet or substantially planar form, with a top lateral cheek (108; 308) and a bottom lateral cheek (109) which are joined via a perimeter (103) having a rear face (107; 207; 307) and a front rim (104; 304);
- the main function is produced essentially via an output face composed of the front rim (104; 304) of the diffusion screen (113; 313); and
- at least a part (115) of the top lateral cheek (108; 308) diffuses a light beam (112) notably contributing to the production of the main function and/or producing an additional optical projection function; and
- said part (115) is oriented so as to increase the visible lit surface of the optical system in the direction of emission (X) of the light of the main function.

2. Optical system (100; 200; 300) according to the preceding claim, **characterized in that** the front rim (104; 304) has a thickness of between 3 and 5 millimetres, notably 4 millimetres.

3. Optical system (100; 200; 300) according to one of the preceding claims, **characterized in that** the main optical function produced is of the stop, sidelight or direction indicator light type.

4. Optical system (100; 200; 300) according to the preceding claim, **characterized in that** the top lateral cheek (108; 308) diffuses a light beam (112) producing an additional function of side marking type.

5. Optical system (100; 200; 300) according to at least one of the preceding claims, **characterized in that** the top lateral cheek (108; 308) diffuses a light beam via a set of micro-roughnesses capable of outwardly dispersing from the diffusion screen (113; 313) a part (112) of the light rays being propagated in said diffusion screen, these micro-roughnesses notably forming a plurality (110) of minidiscs.

6. Optical system (100; 200; 300) according to the preceding claim, **characterized in that** said micro-roughnesses form minidiscs having a diameter of between two tenths of a millimetre and six tenths of a millimetre, typically four tenths of a millimetre.

7. Optical system (100; 200; 300) according to at least one of the preceding claims, **characterized in that** it comprises a plurality of light sources (101, 301) and that said light sources (101, 301) are disposed facing the rear face (107; 307) of the diffusion screen (113; 313) .

8. Optical system (200) according to at least one of Claims 1 to 6, **characterized in that** it comprises a plurality of light sources (101, 301) and at least one lateral face (105, 106), said light sources (201) being disposed facing at least one of the lateral faces (105; 106) of the diffusion screen (113).

9. Optical system (200) according to the preceding claim, **characterized in that** said light sources (201) are disposed facing a single lateral face of the diffusion screen (113).

10. Optical system (200) according to at least one of Claims 8 and 9, **characterized in that** the rear face (207) of the perimeter (103) comprises a plurality of reflecting prisms (208) capable of orienting the light rays (202) produced by said light sources (201) towards the front rim (104) of the diffusion screen (113).

11. Motor vehicle headlight or signalling light, **characterized in that** it is equipped with the optical system (100; 200; 300) according to one of the preceding claims.
